# EUROPÄISCHE PATENTANMELDUNG

(11) **EP 2 594 855 A1**
(43) Veröffentlichungstag der Anmeldung: **22.05.2013**
(21) Anmeldenummer: 11009103.0
(22) Anmeldetag: 16.11.2011
(51) Int. Cl.: F24D 3/14, F24D 19/10, F16L 37/33

(54) **Heizelement**

(71) Anmelder: Winkler Technik GmbH, 88662 Überlingen (DE)
(72) Erfinder: Schöpf, Saskia, 78354 Sipplingen (DE); Winkler, Wolfram, 88662 Überlingen (DE); Merkl, Thomas, 88709 Meersburg (DE); Stein, Anatol, 88690 Mühlhofen (DE)
(74) Vertreter: Weiss, Peter

(57) **Zusammenfassung**

Bei einem Heizelement (1), das Strahlungswärme abgibt, mit
einer Schlauchleitung (3) für
eine flüssige Wärmequelle,
einem Vorlaufanschluss (4) und
einem Rücklaufanschluss (5), soll eine erste drucksichere Kupplung an dem Vorlaufanschluss (4) und eine zweite drucksichere Kupplung an dem Rücklaufanschluss (5) vorgesehen sein, insbesondere geeignet zu verhindern, dass die Wärmequelle ungewollt aus der Schlauchleitung (3) austritt.

## Beschreibung

### TECHNISCHES GEBIET

Die Erfindung betrifft ein Heizelement nach den Merkmalen des Oberbegriffs des Anspruchs 1.

### STAND DER TECHNIK

Aus dem Stand der Technik sind eine Vielzahl von Heizelementen und auch mobile Heizelemente bekannt. Hierzu zählen beispielsweise Wärmepilze oder Warmluftgebläse. Nachteiligerweise tritt dabei oft Zugluft und/oder Überhitzung auf. Dieser Effekt wird durch flächige Heizelemente bzw. Flächenheizungen wie beispielsweise Fussbodenheizungen vermieden, da diese aufgrund ihrer grossen Fläche eine geringere Grundtemperatur aufweisen.

Beispielsweise offenbart die DE 200 15 859 U1 ein Heizelement, insbesondere geeignet als Fussbodenheizung. Dieses Heizelement ist ebenfalls flexibel oder mobil einsetzbar. Dazu wird das Heizelement mit einer Heizeinrichtung verbunden. Allerdings besteht die Gefahr, dass das Heizelement bzw. die Heizeinrichtung nach dem Trennen von der Versorgungsleitung ausläuft bzw. Luft oder Schmutz in das Heizelement eindringen. Damit ist das Heizelement nicht auf einfache Art und Weise mobil einzusetzen, da immer darauf geachtet werden muss, dass keine Flüssigkeit austritt.

### BESCHREIBUNG DER ERFINDUNG

Aufgabe der Erfindung ist es ein verbessertes Heizelement zu schaffen, das die oben genannten Nachteile minimiert und vielfältig einsetzbar ist.

Zur Lösung der Aufgabe führen die Merkmale des kennzeichnenden Teils des Anspruchs 1.

Ein Heizelement, das Strahlungswärme abgibt, umfasst eine Schlauchleitung für eine flüssige Wärmequelle, einen Vorlaufanschluss und einen Rücklaufanschluss, wobei der Vorlaufanschluss eine erste drucksichere Kupplung aufweist und der Rücklaufanschluss eine zweite drucksichere Kupplung aufweist. Dadurch wird vorteilhafterweise verhindert, dass die Wärmequelle oder das Heizmedium ungewollt aus der Schlauchleitung austritt. Dies ist besonders vorteilhaft, da das Heizelement nach dem Trennen von einer Heizeinrichtung durch diese drucksicheren Kupplungen auf einfache Art und Weise transportiert werden kann. Ebenfalls vorteilhaft ist, dass durch die drucksichere Kupplung verhindert wird, dass Luft und oder Schmutz in die Schlauchleitung des Heizelements eindringt.

In typischen Ausführungsformen weist das Heizelement eine Wanne auf. Dadurch ergibt sich der Vorteil, dass alle Einzelteile des Heizelements in der Wanne aufgenommen werden können. Vorteilhafterweise ist das Heizelement deshalb auf einfache Art und Weise zu transportieren. Zweckmässigerweise ist die Schlauchleitung in der Wanne aufgenommen.

Vorteilhafterweise weist die Wanne eine Öffnung auf. Bevorzugt ist die Öffnung so ausgebildet, dass der Vorlaufanschluss und/oder der Rücklaufanschluss der Schlauchleitung durch die Öffnung aus der Wanne austreten. Dadurch ergibt sich der Vorteil, dass das Heizelement ein geschlossenes Element ist mit zwei aussen liegenden Anschlüssen. Ebenfalls vorteilhaft ist, dass die aussenliegenden Anschlüsse einfache Steckkupplungen sind. Dadurch kann das Heizelement auf einfache Art und Weise mit den Leitungen einer Heizeinrichtung zum Erwärmen von Wasser verbunden werden.

Zweckmässigerweise ist das Heizelement, insbesondere die Wanne nach oben durch eine Trittfläche verschlossen. Dadurch ergibt sich der Vorteil, dass das Heizelement als Fussbodenheizung begehbar ist. Bevorzugt ist die Trittfläche aus Holz, einer Spanplatte, Metall, Riffelblech, Kunststoff oder Laminat ausgebildet.

Zweckmässigerweise kann das Heizelement auch als Flächenheizung an der Wand oder frei stehend im Raum angeordnet werden. Dadurch erhält man eine mobile Heizung, die mit relativ geringere Vorlauftemperatur gute Heizergebnisse erzielt. Bei einer Anordnung des Heizelementes an der Wand kann ein entsprechender Entlüfter vorgesehen werden.

In typischen Ausführungsformen ist die Schlauchleitung mit der Wärmequelle vorgefüllt. Dadurch ergibt sich der Vorteil, dass das Heizelement an dem Einsatzort sofort einsatzfähig ist und nicht auf aufwendige Art und Weise befüllt werden muss.

Bevorzugt ist die Wärmequelle eine frostsichere vorgefüllte Wasser-Wärmequelle und besonders bevorzugt ein Glykolgemisch. Besonders bevorzugt ist die Wärmequelle ein 30 %iges Glykolgemisch. Dadurch ergibt sich der Vorteil, dass die Wärmequelle bzw. das Heizelement bis etwa -20° frostsicher ist.

Zweckmässigerweise ist die Schlauchleitung mäanderförmig verlegt. Hierdurch ergibt sich der Vorteil, dass auf einer relativ kleinen Fläche eine grosse Leitungslänge untergebracht werden kann. In typischen Ausführungsformen ist die Schlauchleitung in Schlaufen verlegt

Vorteilhafterweise weist das Heizelement eine Clipschiene zum Fixieren der Schlauchleitung auf. Bevorzugt ist die Clipschiene an dem Boden der Wanne befestigt. Besonders bevorzugt weist das Heizelement zwei Clipschienen auf. Dadurch ergibt sich der Vorteil, dass die Schlauchleitung sicher in einer gewünschten Position in der Wanne fixiert werden kann.

In typischen Ausführungsbeispielen ist in der Wanne Isoliermaterial angeordnet. Bevorzugt ist das Isoliermaterial zwischen dem Wannenboden und der Schlauchleitung angeordnet. Dadurch ergibt sich der Vorteil, dass die Wärme der Schlauchleitung nicht in den Boden der Wanne, sondern nach oben, in Richtung der Trittfläche, wo die Wärme benötigt wird, abgegeben wird. Ein Beispiel für solche ein Isoliermaterial ist Polystyrol.

Ein besonders bevorzugter Einsatzzweck für das Heizelement ist als Zeltheizung. Vorteilhafterweise ist ein erfindungsgemässes Heizelement um ca. 20% effizienter als herkömmliche Zeltheizungen. Weiter bevorzugte Einsatzzwecke sind: Hallen, Imbissstände, Toilettenwägen, im Freien oder auf Messeständen. Dadurch, dass es sich um eine Flächenheizung handelt, entsteht keine Zugluft und der Komfortbereich von Personen, die sich in Räumen aufhalten, die mit dem Heizelement der Erfindung beheizt werden, steigt an. Eine Überhitzung, besonders im Kopfbereich, wie bei Heizpilzen, wird vermieden.

Gesondert wird Schutz beansprucht für eine mobile Fussbodenheizung mit einem Heizelement, wobei das Heizelement über eine drucksichere Kupplung mit einer Heizstation zum Erwärmen von Wasser oder einer anderen Flüssigkeit verbunden ist.

In typischen Ausführungsbeispielen umfasst eine mobile Fussbodenheizung eine Mehrzahl von erfindungsgemässen Heizelementen. Bevorzugt eignen sich die Heizelemente dazu, um im Tichelmann-System verlegt zu werden. Dadurch ergibt sich der Vorteil, dass sich alle Heizelemente dann relativ gleichmässig erwärmen und zum hydraulischen Abgleich keine zusätzlichen Regelventile benötigt werden.

In einem weiteren Ausführungsbeispiel, insbesondere wenn mehrer Heizelemente zu einer mobilen Fussbodenheizung zusammengeschlossen werden, weist eine Mehrzahl der Heizelemente jeweils auf gegenüberliegenden Seiten den Vorlaufanschluss und den Rücklaufanschluss auf. Dadurch ergibt sich der Vorteil, dass die Heizelemente auf einfache Art und Weise aneinander gesteckt werden können. Das warme Wasser läuft dann von einem ersten Heizelement in ein weiteres daran anschliessendes Heizelement. Dadurch ergibt sich der Vorteil, dass die Verlegung der Heizelemente auch ohne die relativ aufwändige Verrohrung des Tichelmann-Systems möglich ist.

### KURZE BESCHREIBUNG DER ZEICHNUNGEN

Nachfolgend wird die Erfindung anhand ihrer Figuren kurz beschrieben, wobei diese zeigen:
**Figur 1** eine Draufsicht auf ein erfindungsgemässes geöffnetes Heizelement;
**Figur 2** eine Draufsicht auf ein weiteres Ausführungsbeispiel eines erfindungsgemässen Heizelementes; und
**Figur 3** eine Draufsicht auf einen Versorgungskanal in einem Tichelmann-System.

### AUSFÜHRUNGSBEISPIEL

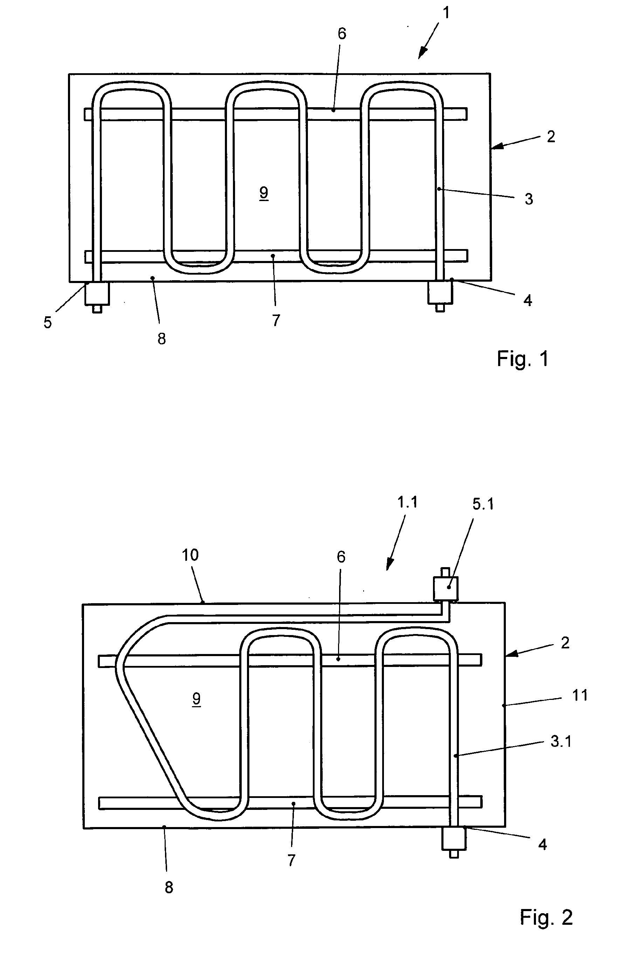

Figur 1 zeigt ein erfindungsgemässes Heizelement 1. Das Heizelement 1 umfasst eine Wanne 2. In der Wanne 2 ist eine Schlauchleitung 3 für eine flüssige Wärmequelle mit einem Vorlaufanschluss 4 und einem Rücklaufanschluss 5 aufgenommen.

An einem Boden 9 der Wanne 2 weist die Wanne 2 eine erste Clipschiene 6 und eine zweite Clipschiene 7 auf. In den Clipschienen 6 und 7 wird die Schlauchleitung 3 gehalten. Die Schlauchleitung 3 ist mäanderförmig verlegt. Auf dem Boden 9 der Wanne 2 ist nicht dargestelltes Isoliermaterial verlegt.

Der Vorlaufanschluss 4 und der Rücklaufanschluss 5 ragen durch jeweils eine Öffnung an einer vorderen Seitenwand 8 der Wanne 2 aus der Wanne 2. An dem Vorlaufanschluss 4 und dem Rücklaufanschluss 5 ist die Schlauchleitung 3 jeweils mit einer drucksicheren Kupplung verbunden, wobei die drucksicheren Kupplungsstücke nicht demontierbar ausgebildet sind. Im Rahmen der Erfindung sollen jedoch auch abnehmbare Kupplungsstücke vorgesehen sein.

Besonders bevorzugt sind die Kupplungsstücke als Steckkupplungen ausgebildet. So kann gewährleistet werden, dass das Heizelement 1 von einer Heizquelle getrennt werden kann.

Nach oben ist das Heizelement über eine nicht näher gezeigte Trittfläche verschlossen. Bevorzugt ist die Trittfläche aus einem rutschhemmenden Material, wie beispielsweise Riffelblech ausgebildet.

Zweckmässigerweise ist das Heizelement geeignet, um im Tichelmann-System verlegt zu werden.

Figur 2 zeigt ein weiteres Ausführungsbeispiel eines Heizelementes 1.1., das Strahlungswärme abgibt und mobil eingesetzt werden kann.

Gleiche oder ähnliche Bauteile werden im Folgenden mit gleichen oder ähnlichen Bezugszeichen bezeichnet.

Analog zum Ausführungsbeispiel des Heizelements 1 weist auch das Heizelement 1.1 eine Schlauchleitung 3.1, die mit Clipschienen 6 und 7, in einer Wanne 2, festgelegt ist, auf.

Der Vorlaufanschluss 4 tritt ebenfalls aus der vorderen Seitenwand 8 aus einer Öffnung aus.

Im Gegensatz zum Heizelement 1 tritt bei dem Heizelement 1.1 ein Rücklaufanschluss 5.1 aus einer gegenüberliegenden Seitenwand 10 aus. Zweckmässigerweise sind der Vorlaufanschluss 4 und der Rücklaufanschluss 5.1 so angeordnet, dass sie auf einer gemeinsamen Parallelen zu einer Seitenwand 11 der Wanne 2 liegen. Dadurch ergibt sich der Vorteil, dass eine Mehrzahl von Heizelementen 1.1 aneinander gesteckt werden können. Das Wasser tritt dann über den Rücklaufanschluss 5.1 des ersten Heizelementes 1.1 aus und wieder in den Vorlaufanschluss 4 des anschliessenden Heizelementes ein.

Die Funktionsweise der vorliegenden Erfindung ist Folgende:
Das Heizelement 1 wird in einen zu heizenden Raum, beispielsweise einen Imbissstand, ein Zelt, einen Toilettenwagen oder dergleichen eingebracht. Es besteht die Möglichkeit das Heizelement 1 vertikal entlang einer Wand oder im freien Raum aufzustellen. Das Heizelement 1 kann vor allem auch als Fussbodenheizung auf den Boden gelegt werden. In diesem Fall kann das Heizelement 1 bzw. seine Trittfläche auch betreten werden. Wird das Heizelement veritkal entlang einer Wand aufgestellt, kann ein entsprechender Entlüfter vorgesehen weden.

Dann wird das Heizelement 1 über den Vorlaufanschluss 4 und den Rücklaufanschluss 5 bzw. die drucksicheren Kupplungen an den Anschlüssen mit einer Heizquelle, bevorzugt einer Warmwasserheizquelle verbunden. Das in der Heizquelle erwärmte Wasser fliesst durch den Vorlaufanschluss 4 in die Schlauchleitung 3 in dem Heizelement 1 und aus dem Rücklaufanschluss 5 wieder zurück in die Heizquelle.

Nach Gebrauch kann das Heizelement 1 an dem Vorlaufanschluss 4 und dem Rücklaufanschluss 5 über die drucksicheren Kupplungen auf einfache Art und Weise wieder von der Heizquelle getrennt werden. Besonders vorteilhaft ist, dass die in die Schlauchleitung 3 vorgefüllte Wärmequelle aufgrund der drucksicheren Kupplungen an dem Vorlaufanschluss 4 und dem Rücklaufanschluss 5 nicht auslaufen kann und auch keine Luft oder andere Stoffe in die Schlauchleitung eintreten können.

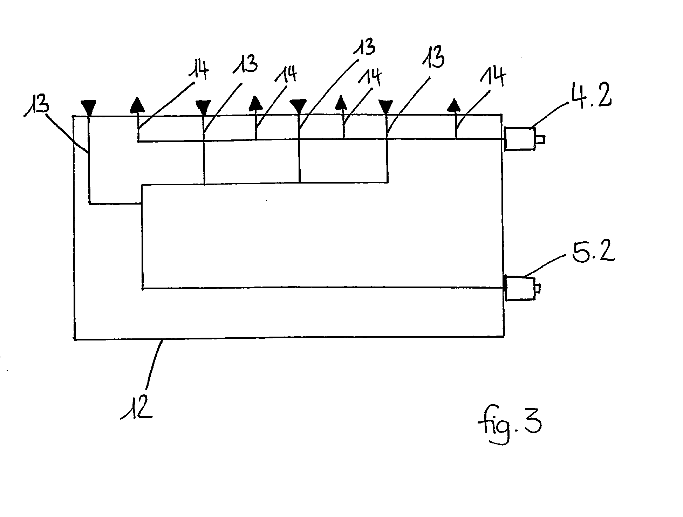

Figur 3 zeigt der Vollständigkeit halber einen Versorgungskanal 12 zur Verwendung in dem Tichelmann-System. Einzelne Heizelemente 1 und 1.1 können über den Versorgungskanal 12 miteinander verbunden werden, wobei die Anordnung des Versorgungskanals 12 bevorzugt neben der Heizelementeanordnung erfolgt, wobei darauf zu achten ist, dass jedes einzelne Heizelement 1 bzw. 1.1 auf oben bereits beschriebene Art und Weise über einen Verlaufanschluss 4 mit einer Vorlaufleitung 13 und über seinen Rücklaufanschluss 5 bzw. 5.1 mit einer Rücklaufleitung 14 verbunden ist. Insgesamt gespeist wird die Anordnung dann durch einen Vorlaufanschluss 4.2 des Versorgungskanals 12. Zurück fliesst das Wasser dann durch einen Rücklaufanschluss 5.2 des Versorgungskanals 12.

Generell ist zu erwähnen, dass kürzere Vorlaufleitungen längere Rücklaufleitungen bedeuten und umgekehrt. So wird ein indentischer Druck beibehalten und die Arbeiter, die die Heizelemente 1 bzw. 1.1 zusammenzumontieren haben, müssen keine zusätzlichen Einstellungen vornehmen, sondern müssen sich lediglich an bestimmte vorgegebene Markierungspunkte zum Zusammenstecken halten.

### Bezugszeichenliste

| | | | | | |
|---|---|---|---|---|---|
| 1 | Heizelement | 34 | | 67 | |
| 2 | Wanne | 35 | | 68 | |
| 3 | Schlauchleitung | 36 | | 69 | |
| 4 | Vorlaufanschluss | 37 | | 70 | |
| 5 | Rücklaufanschluss | 38 | | 71 | |
| 6 | Clipschiene | 39 | | 72 | |
| 7 | Clipschiene | 40 | | 73 | |
| 8 | vordere Seitenwand | 41 | | 74 | |
| 9 | Boden | 42 | | 75 | |
| 10 | Hintere Seitenwand | 43 | | 76 | |
| 11 | Seitenwand | 44 | | 77 | |
| 12 | Versorgungskanal | 45 | | 78 | |
| 13 | Vorlaufleitung | 46 | | 79 | |
| 14 | Rücklaufleitung | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Heizelement (1), das Strahlungswärme abgibt, mit
einer Schlauchleitung (3) für
eine flüssige Wärmequelle,
einem Vorlaufanschluss (4) und
einem Rücklaufanschluss (5),
**gekennzeichnet durch**
eine erste drucksichere Kupplung an dem Vorlaufanschluss (4) und/oder eine zweite drucksichere Kupplung an dem Rücklaufanschluss (5), insbesondere geeignet zu verhindern, dass die Wärmequelle ungewollt aus der Schlauchleitung (3) austritt.

2. Heizelement (1) nach Anspruch 1, **gekennzeichnet durch** eine Wanne (2), in der die Schlauchleitung (3) aufgenommen ist.

3. Heizelement (1) nach Anspruch 2, **dadurch gekennzeichnet, dass** die Wanne (2) eine Öffnung aufweist, geeignet zum Austritt des Vorlaufanschlusses (4) und/oder des Rücklaufanschlusses (5).

4. Heizelement (1) nach einem der Ansprüche 2 oder 3, **dadurch gekennzeichnet, dass** die Wanne (2) durch eine Trittfläche verschlossen ist.

5. Heizelement (1) nach einem der vorhergehenden Ansprüche, **dadurch gekennzeichnet, dass** die Schlauchleitung (3) mit der Wärmequelle vorgefüllt ist.

6. Heizelement (1) nach eine der vorhergehenden Ansprüche, **dadurch gekennzeichnet, dass** die Wärmequelle ein Glykolgemisch ist.

7. Heizelement (1) nach einem der vorhergehenden Ansprüche, **dadurch gekennzeichnet, dass** die Schlauchleitung (3) mäanderförmig verlegt ist.

8. Heizelement (1) nach einem der vorhergehenden Ansprüche, **gekennzeichnet durch** eine Clipschiene (6) zum Fixieren der Schlauchleitung (3).

9. Heizelement (1) nach einem der vorhergehenden Ansprüche, **gekennzeichnet durch** ein Isoliermaterial, das zwischen dem Wannenboden und der Schlauchleitung (3) angeordnet ist.

10. Mobile Fussbodenheizung mit einem Heizelement (1) nach einem der Ansprüche 1 bis 9, **dadurch gekennzeichnet, dass** das Heizelement (1) über eine drucksichere Kupplung mit einer Heizstation zum Erwärmen von Wasser verbunden ist.
